# EUROPEAN PATENT SPECIFICATION

(11) **EP 3 221 730 B1**
(45) Date of publication and mention of the grant of the patent: **23.09.2020**
(21) Application number: 14799815.7
(22) Date of filing: 20.11.2014
(51) Int. Cl.: G02B 6/44

(54) **DEVICE FOR CONNECTING AN OPTICAL CABLE AND A PROTECTIVE TUBE**
VORRICHTUNG ZUR VERBINDUNG EINES OPTISCHEN KABELS MIT EINER SCHUTZHÜLLE
DISPOSITIF PERMETTANT DE CONNECTER UN CÂBLE À FIBRE OPTIQUE ET UN TUBE PROTECTEUR

(43) Date of publication of application: 27.09.2017
(73) Proprietor: Prysmian S.p.A., 20126 Milan (IT)
(72) Inventor: ABBIATI, Fabio, I-20126 Milano (IT); LE DISSEZ, Arnaud, I-20126 Milano (IT)
(74) Representative: Pietra, Giulia
(86) International application number: PCT/EP2014/075099
(87) International publication number: WO 2016/078708

(56) References cited:
- EP-A2- 0 355 639
- DE-U1-202005 016 257
- DE-U1-202005 016 257
- US-A- 5 166 996
- US-A1- 2004 114 901
- US-B1- 6 389 214

## Description

### Technical field

The present invention relates to the field of devices for installation of optical access networks, for instance FTTH (Fiber To The Home) networks and FTTP (Fiber To The Premises) networks. In particular, the present invention relates to a device for connecting an optical cable and a protective tube fitted onto a bare optical fiber extracted from the optical cable. The present invention also relates to an optical fiber protection assembly comprising such device.

### Background art

As known, installation of an optical access network (such as for instance an FTTH or FTTP network) typically requires installing optical cables and optical boxes (e.g. transition boxes and termination boxes) within a building.

Installation of an optical cable in particular typically requires laying the cable in suitable ducts attached to or embedded within the walls of the building. Further, installation of an optical cable may also comprise connecting one or more of its optical fibers to the fibers of another cable and/or terminating one or more of its optical fibers on respective optical connectors.

An optical cable for optical access network typically comprises one or more optical fibers enclosed within an external sheath. Within the external sheath, the optical fibers - depending on the cable construction - may be surrounded by intermediate layers, e.g. buffer tubes or retaining elements carrying out a fiber grouping function and/or a mechanical protection function. In some particularly simple cable constructions, no intermediate layer is provided between optical fibers and external sheath. In other words, the bare optical fibers are directly arranged within the external sheath of the optical cable.

In the present description and in the claims, the expression "bare optical fiber" will designate an optical waveguide made of a core (which is the light transmission area of the fiber), and a cladding (which provides a lower refractive index at the core interface in order to cause light reflection within the core), and a coating (which comprise one or more layers of plastic to preserve the fiber strength, absorb shocks and provide an extra fiber protection). The external diameter of a bare optical fiber for telecommunication purposes typically is of about 250 µm.

Exemplary optical cables wherein the bare optical fibers are directly arranged within the external sheath are the so-called "low friction indoor optical cables", which are flat cables particularly suitable for being installed (namely, pushed or pulled) in ducts.

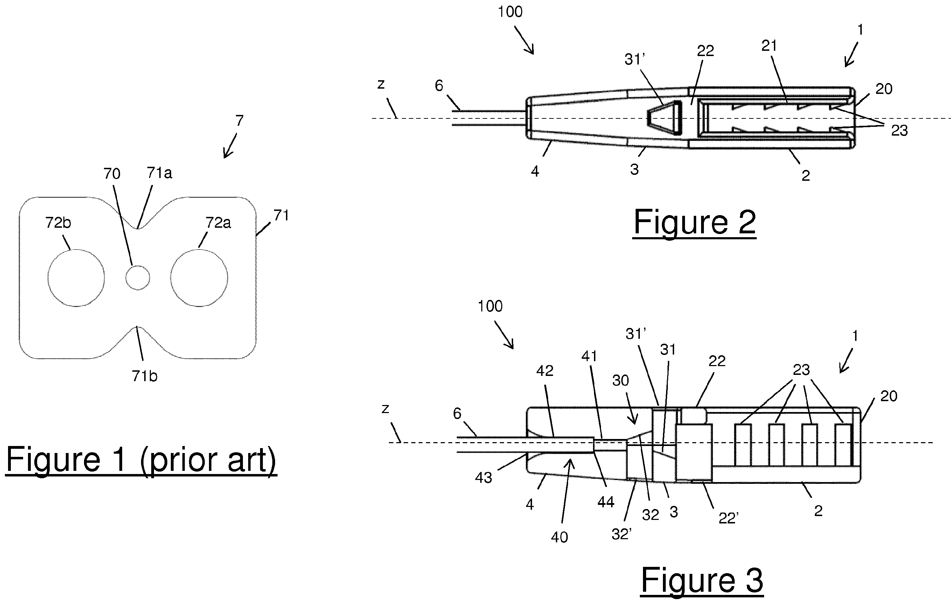

An exemplary low friction indoor optical cable is schematically depicted in Figure 1. The cable 7 comprises an optical fiber 70 (though, in cables of this type, two or more optical fibers may be included in the cable) and a polymeric external sheath 71, preferably made of a LS0H (Low Smoke Zero Halogen) material. The cross section of the external sheath 71 has a flat shape, in particular the shape of a rectangle with round corners and two opposite central recesses 71a, 71b. The recesses 71a, 71b define a narrow, central sheath portion and two enlarged, side sheath portions. The optical fiber 70 is arranged in the central sheath portion, between the two central recesses 71a, 71b. Two strength members 72a, 72b are typically embedded within the two enlarged, side sheath portions. The strength members 72a, 72b may be either metallic (e.g. made of steel wires) or dielectric (e.g. made of FRP, namely Fiber Reinforced Polymers). Preferably, the external size of the cable 7 may be e.g. 1.6 mm x 2.0 mm or 2.0 mm x 3.0 mm, mainly depending on the type and size of the strength members used.

When the operator responsible of installing an optical cable for FTTH or FTTP purposes has to connect or terminate one or more optical fibers included in an optical cable, he typically removes a length of the cable external sheath, so as to expose the optical fibers comprises therein. In case the optical cable comprises one or more bare optical fibers directly arranged within the external sheath (such as for example a low friction indoor optical cable as described above), this operation results in a direct exposure of the bare optical fiber(s) of the cable.

Bare optical fibers are however very critical to be managed by the operator and may easily break, if the operator is not sufficiently skilled and careful. The handling of bare fibers therefore requires time, expertise and care by operators.

Moreover, the boxes housing optical connections between optical fibers (e.g. distribution boxes or transition boxes) typically comprise several optical cables and optical fibers serving the various customers residing in the building, which are all squeezed in a very narrow space and may cross each other several times. The optical cables and optical fibers housed in a same box may have different degrees of protection, namely bare optical fibers may coexist with protected (e.g. buffered) optical fibers and/or with whole optical cables. In such context, bare optical fibers are the weakest elements from the mechanical point of view, and may accordingly be damaged by the continuous contact and frictions with more protected elements. EP 0 355 639 A2 discloses a device according to the preamble of claim 1.

### Summary of the invention

The inventors have noticed that, in principle, the above drawbacks could be solved by protecting each bare optical fiber exposed following to removal of the cable external sheath by a respective protective tube, which the operator may fit onto the bare optical fiber immediately after the external sheath removal and before performing any other operation on the fiber. The protective tube may be for instance a flexible tube with an external diameter of 900 µm.

However, fitting such a small protective tube onto a bare optical fiber is a critical operation, which requires time, precision and care by the operator.

Furthermore, the protective tube should be fixed to the cut end of the cable external sheath in such a way to prevent possible breakage of the bare optical fiber at the point where it exits the cable external sheath. Such fixing should be firm and stable. Moreover, the fixing operation should be easy and quick, so that it may be carried out in a short time and safely even by less skilled operators.

In view of the above, the Applicant has tackled the problem of providing a device for connecting an optical cable and a protective tube fitted onto a bare optical fiber protruding from the cable, which solves the above problems.

In particular, the Applicant has tackled the problem of providing a device which eases the operation of fitting the protective tube onto the bare optical fiber and which allows firmly and stably fixing the protective tube to the cut end of the cable external sheath, in an easy way.

The Applicant found that the above problems are solved by a device according to claim 1.

The tapered surface of the second channel advantageously eases the insertion of the bare optical fiber in the protective tube, thereby reducing the amount of time and the degree of precision and care needed to carry out this operation.

Besides, the longitudinally opened first channel allows fixing the cut end of the cable external sheath in the device by means of a very simple manual operation. Indeed, as it will be described in detail herein after, the operator may easily fix the cut end of the cable external sheath in the device by pushing it in the first channel through its longitudinally opened side. Hence, the fixing operation is easy and quick, and may be carried out in a short time and safely even by less skilled operators.

The device is manufactured as a single integral body. This, besides providing a device with particularly reduced size, also simplifies the process for manufacturing the device. The device may be manufactured e.g. via a molding operation. Besides, the device may be manufactured as an integral body made of a rigid material, thereby providing a rigid connection between the end of the cable external sheath and the protective tube, which prevents any breakage of the bare optical fiber at the point where it exits the cable external sheath.

Preferably, the first channel exhibits a cable retention bar at its end adjacent to the central portion of the device, the cable retention bar terminating the longitudinal opening.

Preferably, the first channel further comprises cable retaining means arranged on at least one sidewall of the first channel adjacent to the longitudinal opening.

Preferably, the cable retaining means comprise two pluralities of teeth arranged on two opposite sidewalls of the first channel adjacent to the longitudinal opening.

Preferably, the tapered guiding wall has the shape of at least a portion of the sidewall of a first truncated cone with axis substantially aligned with the longitudinal direction z, larger base facing the first end portion and smaller base facing the second end portion.

Preferably, the second channel comprises a further tapered guiding wall having the shape of at least a portion of the sidewall of a second truncated cone, the first truncated cone and the second truncated cone having substantially the same shape and size and being consecutive along the longitudinal direction z.

According to a preferred embodiment, each one of the guiding wall and the further guiding wall has an angular width lower than or equal to 180°.

Preferably, the guiding wall and the further guiding wall are arranged in diametrically opposed angular positions on a plane perpendicular to the longitudinal direction z.

Preferably, the second end portion comprises a third channel substantially contiguous to the second channel along the longitudinal direction z.

Preferably, the third channel comprises a first portion adjacent to the central portion of the device and a second portion opposite to the central portion of the device, the second portion of the third channel having a diameter larger than the first portion of the third channel so as to form an annular step at the junction between the first portion and the second portion.

Preferably, the second portion of the third channel has a funnel-shaped opening suitable for allowing the end of the protective tube being inserted in the device.

In another aspect, the present invention relates to an optical fiber protection assembly comprising a device as set forth above and a protective tube having an end arranged in the second end portion of the device.

### Brief description of the drawings

The present invention will become fully clear by reading the following detailed description, to be read by referring to the accompanying drawings, wherein:
- Figure 1 (already described) schematically shows a cross section of a known low friction indoor optical cable;
- Figure 2 is a front view of an optical fiber protection assembly according to an embodiment of the present invention;
- Figure 3 is a longitudinal cross section view of the assembly of Figure 2;
- Figure 4 is an axonometric view of the assembly of Figure 1;
- Figure 5 schematically depicts an operation carried out on the assembly of Figure 1 in use;
- Figure 6 schematically depicts an alternative operation carried out on the assembly of Figure 1 in use; and
- Figure 7 schematically depicts the assembly of Figure 1 in use.

The figures are not in scale.

### Detailed description of preferred embodiments of the invention

Figures 2 to 4 show an optical fiber protection assembly 100 according to an embodiment of the present invention.

The assembly 100 comprises a connecting device (or simply device) 1 and a fiber protective tube 6.

The device 1 comprise a first end portion 2, a central portion 3 and a second end portion 4. The three portions are integral, namely they form a unique integral body. The body of the device 1 has a shape elongated along a direction z, also termed herein after "longitudinal direction of the device" or, simply, "longitudinal direction".

The first end portion 2 of the device 1 comprises a first channel 20 configured to receive the cut end of the external sheath of an optical cable, e.g. (by way of non limiting example) the low friction indoor optical cable 7 shown in Figure 1.

The first channel 20 is opened at both its longitudinally opposite ends, namely it has two opposite end openings allowing the passage of an elongated body parallel to the longitudinal direction z therethrough.

At least a portion of the first channel 20 is also longitudinally opened. In particular, the first channel 20 has a longitudinal opening 21, namely an elongated opening substantially parallel to the longitudinal direction z, which extends along at least a portion of the channel length. The length of the longitudinal opening 21 preferably is at least 50% the channel length, more preferably at least 80% the channel length.

The length of the first channel 20 along the longitudinal direction z is preferably comprised between 5 mm and 15 mm, more preferably between 8 mm and 12 mm, for instance it may be 10 mm.

The first channel 20 preferably has a cross section whose size and shape match those of the external sheath of the optical cable to be received. Under the non limiting assumption that the optical cable to be received is the low friction indoor optical cable 7 of Figure 1, the first channel 20 preferably has a substantially rectangular cross section whose height and width are slightly larger that the height and width of the cable external sheath 71. For instance, if the external size of the cable 7 is 2.0 mm (width) x 3.0 mm (height), the cross section of the first channel 20 is preferably 2.2 mm (width) x 3.2 mm (height) or more.

At its end adjacent to the central portion 3, the first channel 20 preferably exhibits a cable retention bar 22. The cable retention bar 22 terminates the longitudinal opening 21, so that - at its end adjacent to the central portion 3 - the first channel 20 is substantially circumferentially closed (except a hole due to the molding process, as it will be discussed herein after) and tightly fits the cut end of the external sheath of the optical cable to be received.

The first channel 20 also preferably comprises cable retaining means on at least one of its sidewalls, which are configured to firmly hold the external sheath of the optical cable within the first channel 20. According to preferred embodiments of the present invention, the cable retaining means comprise a plurality of teeth 23 arranged on a sidewall of the first channel 20 adjacent to the longitudinal opening 21. More preferably, the cable retaining means comprise two pluralities of teeth 23 arranged on the two, opposite sidewalls adjacent to the longitudinal opening 21, as shown in the drawings. On each sidewall, the teeth 23 are preferably substantially equispaced. A space with no teeth 23 is preferably provided on each sidewall in proximity of the cable retaining bar 22. The length of such space is preferably comprised between 2 mm and 5 mm, more preferably between 3 mm and 4 mm. Each tooth 23 preferably has substantially the shape of a right triangle (see Figure 2), whose hypotenuse faces the open end of the first channel 21 opposite to the central portion 3 of the device 1. Typically, the height of each tooth is comprised between 5% and 20% the width of the cable and the length of each tooth is comprised between 1 mm and 2 mm. The teeth are spaced between them typically of 2 or 3 times the length of each tooth.

The central portion 3 of the device 1 preferably comprises a second channel 30. The second channel 30 is preferably contiguous to the first channel 20 along the longitudinal direction z.

The second channel 30 preferably comprises at least one guiding wall configured to align a bare optical fiber exiting the cut end of the external sheath of the optical cable arranged in the first channel 20 with a protective tube held in the second end portion 4 of the device 1. More specifically, the second channel 30 preferably comprises at least one guiding wall having a tapered shape, in particular the shape of at least a portion of the sidewall of a truncated cone with axis substantially aligned with the longitudinal direction z, larger base facing the first end portion 2 of the device 1 and smaller base facing the second end portion 4 of the device 1.

More preferably, the second channel 30 comprises two tapered guiding walls 31, 32, as shown in Figure 2. The first guiding wall 31 has the shape of at least a portion of the sidewall of a first truncated cone arranged as described above, while the second guiding wall 32 has the shape of at least a portion of the sidewall of a second truncated cone arranged as described above, the first and the second truncated cones having substantially the same shape and size and being consecutive along the longitudinal direction z. The first guiding wall 31 and the second guiding wall 32 have an angular width lower than or equal to 180°, more preferably equal to 180°. The first guiding wall 31 and the second guiding wall 32 are preferably arranged in diametrically opposed angular positions on a plane perpendicular to the longitudinal direction. Preferably, the first guiding wall 31 and the second guiding wall 32 form angles of about 20° (positive and negative, respectively) with respect the longitudinal axis z.

This arrangement with two diametrically opposed and consecutive tapered guiding walls, each one having an angular width of substantially 180°, allows guiding the bare optical fiber towards the protective tube 6 in any radial direction (namely, in any direction of a plane perpendicular to the longitudinal direction z), while at the same time eases the manufacturing of the device 1 via a molding process, as it will be discussed in detail herein after.

The second end portion 4 of the device 1 preferably comprises a third channel 40. The third channel 40 is preferably contiguous to the second channel 30 along the longitudinal direction z. The third channel 40 is opened at both its longitudinally opposite ends, namely it has two opposite end openings allowing the passage of an elongated body parallel to the longitudinal direction z therethrough. The third channel 40 preferably is a circumferentially closed channel.

The third channel 40 preferably comprises two contiguous portions, namely a first portion 41 and a second portion 42.

The first portion 41 is adjacent to the second channel 30 and preferably has the same diameter as the smaller base of the truncated cones forming the tapered guiding walls 31, 32. Preferably, such diameter is substantially equal to the inner diameter of the protective tube 6, for example 0.6 mm.

The second portion 42 of the third channel 40 is preferably configured to receive an end of the protective tube 6. To this purpose, the second portion 42 has shape and size matching the outer shape and size of the protective tube 6. Hence, if the protective tube 6 has a circular cross section with a certain outer diameter, the second portion 42 of the third channel 40 also preferably has a circular cross section with a diameter slightly larger (for example of 0.1 mm) than the outer diameter of the protective tube 6. For instance, if the outer diameter of the protective tube 6 is 900 µm, the circular cross section of the second portion 42 of the third channel 40 preferably has diameter of 1 mm. At its end opposite to the first portion 41, the second portion 42 of the third channel 40 preferably exhibits a funnel-shaped opening 43 (visible in Figure 2).

Since the second portion 42 is larger than the first portion 41, an annular step 44 is formed at the junction of portions 41 and 42.

The length of the third channel 40 along the longitudinal direction z is preferably comprised between 4 mm and 8 mm, more preferably between 5 mm and 7 mm, for instance it may be 6 mm. Preferably, the length of each portion 41, 42 is about 3 mm.

As mentioned above, the device 1 is preferably a unique integral body. The device 1 is preferably made of a rigid plastic material such as for instance ABS (Acrylonitrile butadiene styrene).

The device 1 is preferably manufactured via an injection molding process. As known, in order to allow removal of the molded body from the mold, the mold features must not overhang one another in the direction where the mold opens. It may be appreciated that the two diametrically opposed and consecutive tapered guiding walls 31, 32 of the second channel 30 may be obtained via mold features that do not overhang one another in the direction where the mold opens, which preferably is perpendicular to the longitudinal direction z. Hence, the two diametrically opposed and consecutive tapered guiding walls 31, 32 advantageously guide the optical fiber towards the protective tube in any radial direction (namely, in any direction of a plane perpendicular to the longitudinal direction z), while at the same time may be easily manufactured via a molding process.

It shall also be appreciated that the mold features needed to obtain the guiding walls 31, 32 - as well as the mold feature need to obtain the cable retaining bar 22 - in order not to overhang with other mold features in the direction where the mold opens, are shaped so as to form in the molded device respective holes opposite to the molded element.

For instance, the mold feature configured to obtain the bar 22 forms a corresponding hole 22' opposite to the bar 22. Similarly, the mold feature configured to obtain the tapered guiding wall 31 forms a corresponding hole 31' diametrically opposite to the guiding wall 31, whereas the mold feature configured to obtain the tapered guiding wall 32 forms a corresponding hole 32' diametrically opposite to the guiding wall 32.

The optical fiber protection assembly 100 comprising the device 1 and the protective tube 6 is preferably factory-assembled, and then provided to an operator in charge of performing the installation of an optical access network.

In the assembly 100, the protective tube 6 preferably is a flexible tube (preferably made of a polymeric material) suitable for being fitted onto an optical fiber for telecommunication purposes.

In order to assembly the optical fiber protection assembly 100, an end of the protective tube 6 is inserted in the third channel 40 of the device 1, in particular in the second portion 42 of the third channel 40, as depicted in Figure 2. The end of the protective tube 6 in particular is inserted in the second portion 42 of the third channel 40 via the funnel-shaped opening 43, which eases this operation. The protective tube 6 moves forward along the second portion 42 of the third channel 40 until it rests against the annular step 44 at the junction between first portion 41 and second portion 42. The protective tube 6 is firmly fixed in the second portion 42 of the third channel 40, e.g. using a glue.

The assembly 100 is then ready for use by operators performing in-field installations of optical access networks.

In particular, an operator wishing to use an assembly 100 for protecting e.g. the bare optical fiber 70 of the optical cable 7, first of all removes from the optical cable 7 a length of its external sheath 71, so that a length of the bare optical fiber 70 is exposed.

Then, the operator preferably inserts the end of the optical fiber 70 in the second channel 30, passing through the longitudinal opening 21 of the first channel 20 and then underneath the cable retaining bar 22. By further pushing the optical fiber 70 in the second channel 30, the tapered guiding walls 31, 32 guide the bare optical fiber 70 towards the first portion 41 of the third channel 40. By further pushing it, the bare optical fiber 70 passes through the first portion 41 of the third channel 40, and then enters the end of the protective tube 6 fixed in the second portion 42 of the third channel 40.

Hence, the tapered guiding walls 31, 32 of the second channel 30 advantageously ease the insertion of the bare optical fiber 70 in the protective tube 6, thereby reducing the amount of time and the degree of precision and care needed to carry out this operation.

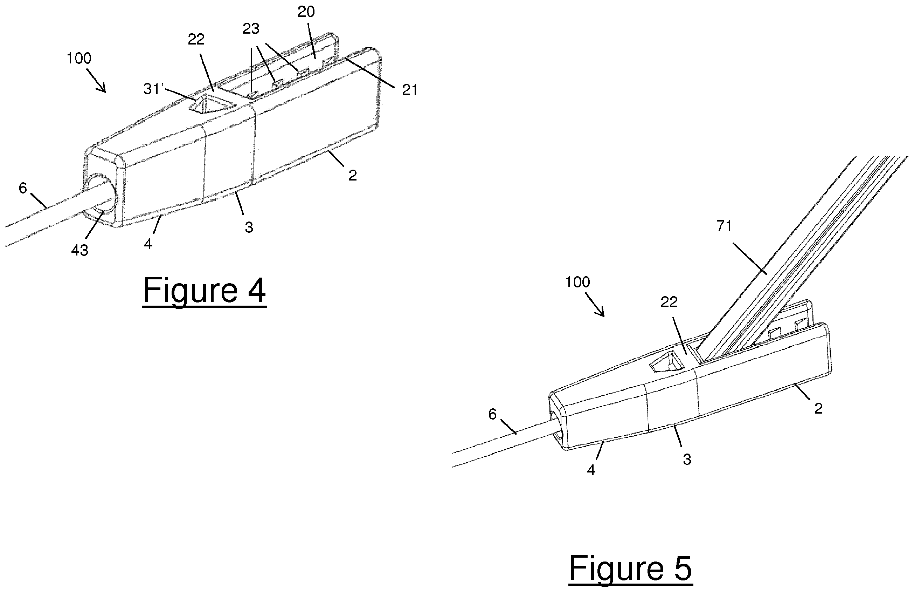

Then, the operator fixes the external sheath 71 of the optical cable 7 in the first channel 20 of the device 1. To this purpose, the operator firstly preferably inserts the cut end of the external sheath 71 underneath the cable retaining bar 22. To perform this operation, the operator preferably holds the optical cable 7 in a position tilted relative to the longitudinal direction z of the device 1 and reaches the end of the first channel 20 underneath the cable retaining bar 22 through the longitudinal opening 21, as schematically depicted in Figure 5. This way, as the cut end of the external sheath 71 is inserted underneath the cable retaining bar 22, the movement of the cable external sheath 71 is not hampered by the cable retaining teeth 23 arranged on the sidewalls of the first channel 20. Then, the operator preferably pushes the sheath 71 in the first channel 20 through the longitudinal opening 21, essentially by rotating the external sheath 71 about its cut end blocked underneath the cable retaining bar 22.

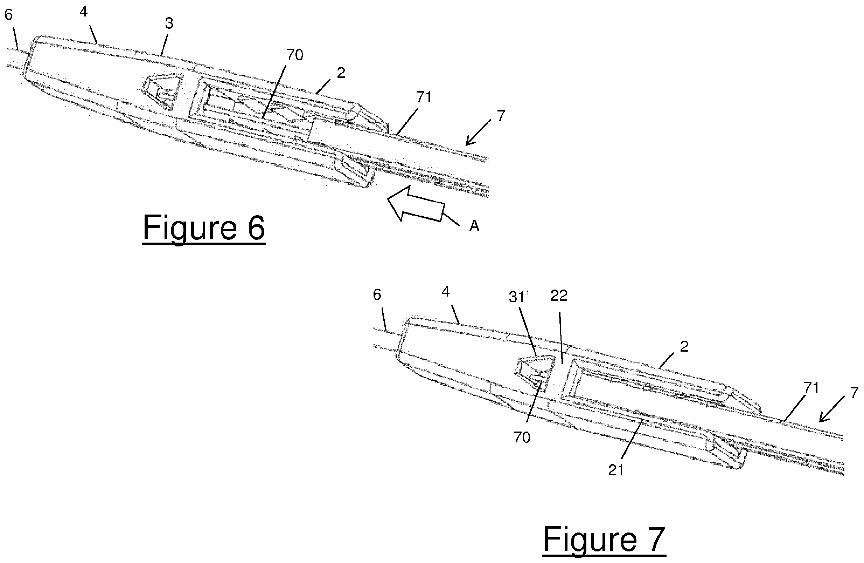

Alternatively, as schematically shown in Figure 6, the operator may insert the cut end of the external sheath 71 in the end opening of the first channel 20 and then push it along the first channel 20 in the longitudinal direction z (see arrow A), until the cut end of the of the external sheath 71 is inserted underneath the cable retaining bar 22.

As the external sheath 70 is inserted in the first channel 1 (as shown in Figure 7), the combination of the teeth 23 and the cable retaining bar 22 firmly holds the external sheath 71 in the first channel 20. In particular, the teeth 23 counteract possible traction forces applied to the optical cable 7 along the longitudinal direction z, which may induce the cable 7 to shift along this direction and exit the first channel 20 through its end opening. Besides, the cable retaining bar 22 prevents the external sheath 71 of cable 7 from exiting the first channel 20 through the longitudinal opening 21. The external sheath 71 of cable 7 is therefore firmly fixed to the protective tube 6 via the device 1.

The device 1 (and hence the assembly 100 comprising the device 1) exhibits several advantages.

First of all, the longitudinally opened first channel 20 allows fixing the cut end of the cable external sheath 71 in the device 1 by means of a very simple manual operation. Indeed, as described above, the operator may easily fix the cut end of the cable external sheath 71 in the device 1 by pushing it in the first channel 20 through its longitudinal opening 21. Hence, the fixing operation is easy and quick, and may be carried out in a short time and safely even by less skilled operators.

Further, as discussed above, the device 1 may be advantageously manufactured as a single integral body. This, besides providing a device with particularly reduced size, also simplifies the device structure and the process for manufacturing the device. The device 1 may be indeed manufactured e.g. via a single molding operation. No moving parts such as covers are needed, which would make the device structure, the device manufacturing and the device use more complex.

Besides, the device 1 provides both a rigid connection between the end of the cable external sheath 71 and the protective tube 6 and a rigid protection of the length of bare optical fiber 70 which is exposed between the cut end of the cable external sheath 71 and the protective tube 6. Any breakage of the bare optical fiber 70 at the point where it exits the cable external sheath 71 is therefore advantageously prevented.

Though in the above description reference has been made to a low friction indoor cable of the type shown in Figure 1, this is not limiting. A device and corresponding optical fiber protection assembly similar to those described above and shown in the drawings may be indeed provided for any type of optical cable, and may be advantageously used for protecting bare optical fibers protruding/extracted from any type of optical cable.

## Claims

1. A device (1) for connecting an optical cable (7) and a protective tube (6) fitted onto a bare optical fiber (70) protruding from said optical cable (7), said device (1) comprising:
• a first end portion (2) comprising a first channel (20) configured to house a cut end of an external sheath (71) of said optical cable (7) from which said bare optical fiber (70) exits;
• a second end portion (4) configured to receive an end of said protective tube (6); and
• a central portion (3) interposed between said first end portion (2) and said second end portion (4), said central portion (3) comprising a second channel (30), said second channel (30) comprising a tapered guiding wall (31) configured to align said bare optical fiber (70) with said protective tube (6) when said protective tube (6) is received in said second end portion (4),
wherein said first end portion (2), said second end portion (4) and said central portion (3) form a unique integral body having a shape elongated in a longitudinal direction (z), said first channel (20) and said second channel (30) being reciprocally aligned along said longitudinal direction (z),
**characterized in that** said first channel (20) has an elongated longitudinal opening (21) parallel to said longitudinal direction (z).

2. The device (1) according to claim 1, wherein said first channel (20) exhibits a cable retention bar (22) at its end adjacent to said central portion (3), said cable retention bar (22) terminating said longitudinal opening (21).

3. The device (1) according to claim 1 or 2, wherein said first channel (20) further comprises cable retaining means (23) arranged on at least one sidewall of said first channel (20) adjacent to said longitudinal opening (21).

4. The device (1) according to claim 3, wherein said cable retaining means (23) comprise two pluralities of teeth (23) arranged on two opposite sidewalls of said first channel (20) adjacent to said longitudinal opening (21).

5. The device (1) according to any of the preceding claims, wherein said tapered guiding wall (31) has the shape of at least a portion of the sidewall of a first truncated cone with axis substantially aligned with said longitudinal direction (z), larger base facing said first end portion (2) and smaller base facing said second end portion (4).

6. The device (1) according to claim 5, wherein said second channel (30) comprises a further tapered guiding wall (32) having the shape of at least a portion of the sidewall of a second truncated cone, said first truncated cone and said second truncated cone having substantially the same shape and size and being consecutive along said longitudinal direction (z).

7. The device (1) according to claim 6, wherein each one of said guiding wall (31) and said further guiding wall (32) has an angular width lower than or equal to 180°.

8. The device (1) according to claim 6 or 7, wherein said guiding wall (31) and said further guiding wall (32) are arranged in diametrically opposed angular positions on a plane perpendicular to said longitudinal direction (z).

9. The device (1) according to any of the preceding claims, wherein said second end portion (4) comprises a third channel (40) substantially contiguous to said second channel (30) along said longitudinal direction (z).

10. The device (1) according to claim 9, wherein said third channel (40) comprises a first portion (41) adjacent to said central portion (3) of said device (1) and a second portion (42) opposite to said central portion (3) of said device (1), said second portion (42) of said third channel (40) having a diameter larger than said first portion (41) of said third channel (40) so as to form an annular step (44) at the junction between said first portion (41) and said second portion (42).

11. The device (1) according to claim 10, wherein said second portion (42) of said third channel (40) has a funnel-shaped opening (43) suitable for allowing said end of said protective tube (6) being inserted in said device (1).

12. An optical fiber protection assembly (100) comprising a device (1) according to any of claims 1 to 11 and a protective tube (6) having an end arranged in said second end portion (4) of said device (1).

## Patentansprüche

1. Vorrichtung (1) zur Verbindung eines optischen Kabels (7) mit einer Schutzhülle (6), das auf eine blanke optische Faser (70) aufgesetzt ist, die von dem optischen Kabel (7) vorsteht, wobei die Vorrichtung (1) umfasst:
• einen ersten Endabschnitt (2) mit einem ersten Kanal (20), der so konfiguriert ist, dass er ein abgeschnittenes Ende eines Außenmantels (71) des optischen Kabels (7) aufnimmt, aus dem die blanke optische Faser (70) austritt;
• einen zweiten Endabschnitt (4), der so konfiguriert ist, dass er ein Ende der Schutzhülle (6) aufnimmt; und
• einen zentralen Abschnitt (3), der zwischen dem ersten Endabschnitt (2) und dem zweiten Endabschnitt (4) angeordnet ist, wobei der zentrale Abschnitt (3) einen zweiten Kanal (30) umfasst, wobei der zweite Kanal (30) eine sich verjüngende Führungswand (31) umfasst, die so konfiguriert ist, dass sie die blanke optische Faser (70) mit der Schutzhülle (6) ausrichtet, wenn die Schutzhülle (6) in dem zweiten Endabschnitt (4) aufgenommen ist,
wobei der erste Endabschnitt (2), der zweite Endabschnitt (4) und der zentrale Abschnitt (3) einen einzigen einstückigen Körper mit einer in einer Längsrichtung (z) langgestreckten Form bilden, wobei der erste Kanal (20) und der zweite Kanal (30) entlang der Längsrichtung (z) gegenseitig ausgerichtet sind,
**dadurch gekennzeichnet, dass**
der erste Kanal (20) eine längliche Längsöffnung (21) parallel zu der Längsrichtung (z) aufweist.

2. Vorrichtung (1) nach Anspruch 1, wobei der erste Kanal (20) an seinem, dem zentralen Abschnitt (3) benachbarten Ende, einen Kabelrückhaltesteg (22) aufweist, wobei der Kabelrückhaltesteg (22) die Längsöffnung (21) abschließt.

3. Vorrichtung (1) nach Anspruch 1 oder 2, wobei der erste Kanal (20) ferner Kabelhaltemittel (23) aufweist, die an mindestens einer Seitenwand des ersten Kanals (20) angrenzend an die Längsöffnung (21) angeordnet sind.

4. Vorrichtung (1) nach Anspruch 3, wobei die Kabelhaltemittel (23) zwei Gruppen von Zähnen (23) umfassen, die an zwei gegenüberliegenden Seitenwänden des ersten Kanals (20) angrenzend an die Längsöffnung (21) angeordnet sind.

5. Vorrichtung (1) nach einem der vorhergehenden Ansprüche, wobei die sich verjüngende Führungswand (31) die Form mindestens eines Abschnitts der Seitenwand eines ersten Kegelstumpfes mit einer Achse aufweist, die im Wesentlichen mit der Längsrichtung (z) ausgerichtet ist, wobei die größere Grundfläche dem ersten Endabschnitt (2) und die kleinere Grundfläche dem zweiten Endabschnitt (4) gegenüberliegt.

6. Vorrichtung (1) nach Anspruch 5, wobei der zweite Kanal (30) eine weitere sich verjüngende Führungswand (32) aufweist, die die Form mindestens eines Abschnitts der Seitenwand eines zweiten Kegelstumpfes hat, wobei der erste Kegelstumpf und der zweite Kegelstumpf im Wesentlichen die gleiche Form und Größe haben und entlang der Längsrichtung (z) aufeinanderfolgen.

7. Vorrichtung (1) nach Anspruch 6, wobei sowohl die Führungswand (31) als auch die weitere Führungswand (32) eine Winkelweite von weniger als oder gleich 180° aufweisen.

8. Vorrichtung (1) nach Anspruch 6 oder 7, wobei die Führungswand (31) und die weitere Führungswand (32) in diametral entgegengesetzten Winkelstellungen auf einer Ebene senkrecht zu der Längsrichtung (z) angeordnet sind.

9. Vorrichtung (1) nach einem der vorhergehenden Ansprüche, wobei der zweite Endabschnitt (4) einen dritten Kanal (40) umfasst, der im Wesentlichen an den zweiten Kanal (30) entlang der Längsrichtung (z) angrenzt.

10. Vorrichtung (1) nach Anspruch 9, wobei der dritte Kanal (40) einen ersten Abschnitt (41) angrenzend an den zentralen Abschnitt (3) der Vorrichtung (1) und einen zweiten Abschnitt (42) gegenüberliegend dem zentralen Abschnitt (3) der Vorrichtung (1) aufweist, wobei der zweite Abschnitt (42) des dritten Kanals (40) einen größeren Durchmesser als der erste Abschnitt (41) des dritten Kanals (40) aufweist, um so eine ringförmige Stufe (44) an dem Übergang zwischen dem ersten Abschnitt (41) und dem zweiten Abschnitt (42) zu bilden.

11. Vorrichtung (1) nach Anspruch 10, wobei der zweite Abschnitt (42) des dritten Kanals (40) eine trichterförmige Öffnung (43) aufweist, die geeignet ist, das Einführen des Endes der Schutzhülle (6) in die Vorrichtung (1) zu ermöglichen.

12. Lichtleitfaser-Schutzanordnung (100), umfassend eine Vorrichtung (1) nach einem der Ansprüche 1 bis 11 und eine Schutzhülle (6) mit einem Ende, das in dem zweiten Endabschnitt (4) der Vorrichtung (1) angeordnet ist.

## Revendications

1. Dispositif (1) pour connecter un câble optique (7) et un tube protecteur (6) monté sur une fibre optique nue (70) faisant saillie dudit câble optique (7), ledit dispositif (1) comprenant :
- une première portion d'extrémité (2) comprenant un premier canal (20) configuré pour loger une extrémité coupée d'une gaine externe (71) dudit câble optique (7) à partir duquel sort ladite fibre optique nue (70) ;
- une seconde portion d'extrémité (4) configurée pour recevoir une extrémité dudit tube protecteur (6) ; et
- une portion centrale (3) interposée entre ladite première portion d'extrémité (2) et ladite seconde portion d'extrémité (4), ladite portion centrale (3) comprenant un deuxième canal (30), ledit deuxième canal (30) comprenant une paroi de guidage effilée (31) configurée pour aligner ladite fibre optique nue (70) avec ledit tube protecteur (6) lorsque ledit tube protecteur (6) est reçu dans ladite seconde portion d'extrémité (4),
dans lequel ladite première portion d'extrémité (2), ladite seconde portion d'extrémité (4) et ladite portion centrale (3) forment un corps intégral unique ayant une forme allongée dans une direction longitudinale (z), ledit premier canal (20) et ledit deuxième canal (30) étant alignés réciproquement le long de ladite direction longitudinale (z),
**caractérisé en ce que**
ledit premier canal (20) a une ouverture longitudinale allongée (21) parallèle à ladite direction longitudinale (z).

2. Dispositif (1) selon la revendication 1, dans lequel ledit premier canal (20) présente une barre de rétention de câble (22) à son extrémité adjacente à ladite portion centrale (3), ladite barre de rétention de câble (22) étant placée à l'extrémité de ladite ouverture longitudinale (21).

3. Dispositif (1) selon la revendication 1 ou 2, dans lequel ledit premier canal (20) comprend en outre des moyens de retenue de câble (23) agencés sur au moins une paroi latérale dudit premier canal (20) adjacente à ladite ouverture longitudinale (21).

4. Dispositif (1) selon la revendication 3, dans lequel lesdits moyens de retenue de câble (23) comprennent deux pluralités de dents (23) agencées sur deux parois latérales opposées dudit premier canal (20) adjacentes à ladite ouverture longitudinale (21).

5. Dispositif (1) selon l'une quelconque des revendications précédentes, dans lequel ladite paroi de guidage effilée (31) a la forme d'au moins une portion de la paroi latérale d'un premier cône tronqué doté d'axe sensiblement aligné avec ladite direction longitudinale (z), d'une base plus grande faisant face à ladite première portion d'extrémité (2) et d'une base plus petite faisant face à ladite seconde portion d'extrémité (4) .

6. Dispositif (1) selon la revendication 5, dans lequel ledit deuxième canal (30) comprend une paroi de guidage effilée supplémentaire (32) ayant la forme d'au moins une portion de la paroi latérale d'un second cône tronqué, ledit premier cône tronqué et ledit second cône tronqué ayant sensiblement la même forme et la même taille et étant consécutifs le long de ladite direction longitudinale (z).

7. Dispositif (1) selon la revendication 6, dans lequel chacune de ladite paroi de guidage (31) et de ladite paroi de guidage supplémentaire (32) a une largeur angulaire inférieure ou égale à 180°.

8. Dispositif (1) selon la revendication 6 ou 7, dans lequel ladite paroi de guidage (31) et ladite paroi de guidage supplémentaire (32) sont agencées dans des positions angulaires diamétralement opposées sur un plan perpendiculaire à ladite direction longitudinale (z) .

9. Dispositif (1) selon l'une quelconque des revendications précédentes, dans lequel ladite seconde portion d'extrémité (4) comprend un troisième canal (40) sensiblement contigu audit deuxième canal (30) le long de ladite direction longitudinale (z).

10. Dispositif (1) selon la revendication 9, dans lequel ledit troisième canal (40) comprend une première portion (41) adjacente à ladite portion centrale (3) dudit dispositif (1) et une seconde portion (42) opposée à ladite portion centrale (3) dudit dispositif (1), ladite seconde portion (42) dudit troisième canal (40) ayant un diamètre plus grand que celui de ladite première portion (41) dudit troisième canal (40) de manière à former un pas annulaire (44) au niveau de la jonction entre ladite première portion (41) et ladite seconde portion (42).

11. Dispositif (1) selon la revendication 10, dans lequel ladite seconde portion (42) dudit troisième canal (40) a une ouverture en forme d'entonnoir (43) adaptée pour permettre à ladite extrémité dudit tube protecteur (6) d'être insérée dans ledit dispositif (1).

12. Ensemble de protection de fibre optique (100) comprenant un dispositif (1) selon l'une quelconque des revendications 1 à 11 et un tube protecteur (6) ayant une extrémité agencée dans ladite seconde portion d'extrémité (4) dudit dispositif (1).
